(19) **Europäisches Patentamt / European Patent Office / Office européen des brevets**

(11) **EP 4 123 608 A1**

(12) **EUROPEAN PATENT APPLICATION**

(43) Date of publication:
25.01.2023 Bulletin 2023/04

(21) Application number: 22185236.1

(22) Date of filing: 15.07.2022

(51) International Patent Classification (IPC):
**G07F 17/32** (2006.01)

(52) Cooperative Patent Classification (CPC):
**G07F 17/3223; G07F 17/3227; G07F 17/3234; G07F 17/3239; G07F 17/3241; G07F 17/3262**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.07.2021 GB 202110492**

(71) Applicant: **Games Global Works Limited**
**Douglas, Isle of Man IM1 1LA (GB)**

(72) Inventors:
• **HARPUR, Rory Angus**
**4051 Durban North (ZA)**
• **GASPAR, Michael John**
**KwaZulu-Natal (ZA)**
• **NAICKER, Theo**
**4051 KwaZulu-Natal (ZA)**

(74) Representative: **D Young & Co LLP**
**120 Holborn**
**London EC1N 2DY (GB)**

(54) **PROBABILISTIC REAL-TIME CONTROL SYSTEM WITH MID-TRANSACTION INPUTS AND PROPORTIONAL OUTPUT**

(57)      Persistent storage specifies a base feature, an enhanced feature, and an overall ratio. One or more processors are configured to: receive a first input for the base feature; determine that the enhanced feature has not been activated; determine a first output of the base feature that is probabilistically proportional to the first input in accordance with a first ratio less than or equal to the overall ratio; provide the first output; receive a second input for the base feature; determine that the enhanced feature has been activated; provide one or more additional inputs for the enhanced feature; receive a selected input; determine a particular additional output for the enhanced feature that is probabilistically proportional to the selected input in accordance with the overall ratio; and provide the particular additional output.

FIG. 1

EP 4 123 608 A1

**Description**

**BACKGROUND**

A probabilistic real-time control system may be configured to receive an input and produce a proportional output. As the system is probabilistic, any particular instance of the output value might vary, but the average of *n* output values for the same input value with a large enough *n* is likely to converge to the proportional output, due to the law of large numbers.

An example of such a system is a cloud-computing infrastructure configured to carry out tasks upon request. The probabilistic nature of task scheduling and execution amongst the devices of this infrastructure is effectively non-deterministic. Nonetheless, a design goal may be to maintain a completion time for task output that is proportional, on average, to the size and complexity of the task provided as input.

Likewise, a network access system may be configured to provide an amount of network capacity per unit time (e.g., megabits per second). The probabilistic nature of packet-switched networking makes the amount of actual network capacity received to be effectively non-deterministic. Nonetheless, a design goal may be to maintain an available capacity for each user in accordance with and proportional to their individual service agreements.

**SUMMARY**

A generalized version of a probabilistic real-time control system may be defined to operate in accordance with the following example embodiments.

A first example embodiment of a system may involve persistent storage specifying: a base feature, an enhanced feature, and an overall ratio defining a proportionality between input provided by a user and output provided to the user when the user engages in the base feature and the enhanced feature. One or more processors may be configured to: receive, from a client device, a first input for the base feature, wherein the client device is associated with the user; determine, based on the first input and a state of the system, that the enhanced feature has not been activated; in response to determining that the enhanced feature has not been activated, determine a first output of the base feature, wherein the first output is probabilistically proportional to the first input in accordance with a first ratio that is less than or equal to the overall ratio; provide, to the client device, the first output; receive, from the client device, a second input for the base feature; determine, based on the second input and the state of the system, that the enhanced feature has been activated; in response to determining that the enhanced feature has been activated, provide, to the client device, one or more additional inputs that can be used with the enhanced feature, wherein the one or more additional inputs are probabilistically proportional to expected values of respectively associated additional outputs in accordance with the overall ratio; receive, from the client device, a selected input from the one or more additional inputs; in response to receiving the selected input, determine a particular additional output for the enhanced feature, wherein the particular additional output is probabilistically proportional to the selected input in accordance with the overall ratio; and provide, to the client device, the particular additional output.

The system may be a remote computing infrastructure containing computing resources, wherein the first input is a first computational task, wherein the second input is a second computational task, wherein the state of the system includes computing resource utilization of the system, and wherein the enhanced feature allocates more of the computing resources to the client device than the base feature.

The system may be an access network containing network capacity, wherein the first input is a first data transfer, wherein the second input is a second data transfer, wherein the state of the system includes network capacity utilization of the system, and wherein the enhanced feature allocates more of network capacity to the client device than the base feature.

In some implementations, the first input, second input, each of the one or more additional inputs, the first output, and the particular additional output are representations of values.

In some implementations, determining the first output comprises producing, by way of a random number generator, the first output to be probabilistically proportional to the first input in accordance with the first ratio, wherein determining the particular additional output comprises producing, by way of the random number generator, the particular additional output to be probabilistically proportional to the selected input in accordance with the overall ratio.

In some implementations, providing the first output causes the client device to display an animation that resolves to a visual representation of the first output, wherein providing the particular additional output causes the client device to display a further animation that resolves to a further visual representation of the particular additional output.

In some implementations, providing the one or more additional inputs causes the client device to display a representation of the one or more additional inputs and the expected values of their respectively associated additional outputs.

In some implementations, the overall ratio is between 0.8 and 0.98.

In some implementations, the particular additional output is a probabilistic expected value that is design parameter of the system, wherein the selected input is proportional to the probabilistic expected value in accordance with the overall ratio.

In some implementations, the first ratio equals the overall ratio.

In some implementations, when no input from the one or more additional inputs is selected, the one or more processors are further configured to: determine a second output of the enhanced feature, wherein the second output is probabilistically proportional to the second input in accordance with a second ratio, wherein the overall ratio is based on a linear combination of the first ratio and the second ratio; and provide, to the client device, the second output.

In some implementations, the second output is a probabilistic expected value that is design parameter of the system.

A second example embodiment may involve a computer-implemented method involving the steps of the first example embodiment.

In a third example embodiment, an article of manufacture may include a non-transitory computer-readable medium, having stored thereon program instructions that, upon execution by a computing system, cause the computing system to perform operations in accordance with the first example embodiment.

In a fourth example embodiment, the system may include various means for carrying out each of the operations of the first example embodiment.

These, as well as other embodiments, aspects, advantages, and alternatives, will become apparent to those of ordinary skill in the art by reading the following detailed description, with reference where appropriate to the accompanying drawings. Further, this summary and other descriptions and figures provided herein are intended to illustrate embodiments by way of example only and, as such, that numerous variations are possible. For instance, structural elements and process steps can be rearranged, combined, distributed, eliminated, or otherwise changed, while remaining within the scope of the embodiments as claimed.

## BRIEF DESCRIPTION OF THE DRAWINGS

Figure 1 illustrates a schematic drawing of a computing device, in accordance with example embodiments.

Figure 2 illustrates a schematic drawing of a server device cluster, in accordance with example embodiments.

Figure 3 depicts a client device interacting with a cloud infrastructure, in accordance with example embodiments.

Figure 4 depicts a transaction between a client device and a server device of a cloud infrastructure, in accordance with example embodiments.

Figure 5 depicts a client device using a network access provider, in accordance with example embodiments.

Figure 6 depicts a transaction between a client device and a server device of a network access provider, in accordance with example embodiments.

Figure 7 depicts a graphical user interface, in accordance with example embodiments.

Figure 8 depicts a further graphical user interface, in accordance with example embodiments.

Figure 9 depicts a number of sequences, in accordance with example embodiments.

Figure 10 is a table illustrating mechanics of probabilistic proportionality, in accordance with example embodiments.

Figure 11 depicts a transaction between a client device and a server device, in accordance with example embodiments.

Figure 12 is a flow chart, in accordance with example embodiments.

## DETAILED DESCRIPTION

Example methods, devices, and systems are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features unless stated as such. Thus, other embodiments can be utilized and other changes can be made without departing from the scope of the subject matter presented herein.

Accordingly, the example embodiments described herein are not meant to be limiting. It will be readily understood that the aspects of the present disclosure, as generally described herein, and illustrated in the figures, can be arranged, substituted, combined, separated, and designed in a wide variety of different configurations. For example, the separation of features into "client" and "server" components may occur in a number of ways.

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment. Also, use of the term "embodiment" does not imply or suggest that each embodiment described is a separate invention.

Additionally, any enumeration of elements, blocks, or steps in this specification or the claims is for purposes of clarity. Thus, such enumeration should not be interpreted to require or imply that these elements, blocks, or steps adhere to a particular arrangement or are carried out in a particular order.

## I. Example Computing Devices and Cloud-Based Computing Environments

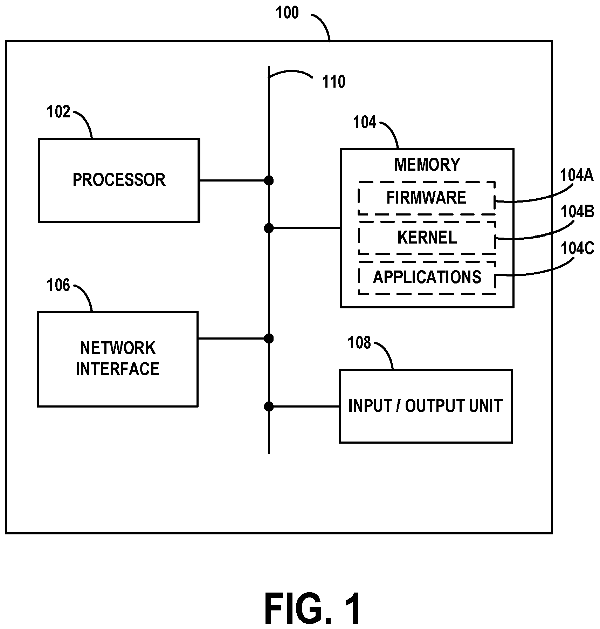

Figure 1 is a simplified block diagram exemplifying a computing device 100, illustrating some of the components that could be included in a computing device arranged to operate in accordance with the embodiments herein. Computing device 100 could be a client device (e.g., a device actively operated by a user), a server device (e.g., a device that provides computational services to client devices), or some other type of computational platform. Some server devices may operate as client devices from time to time in order to perform particular operations, and some client devices may incorporate server features.

In this example, computing device 100 includes processor 102, memory 104, network interface 106, and input / output unit 108, all of which may be coupled by system bus 110 or a similar mechanism. In some embodiments, computing device 100 may include other components and/or peripheral devices (e.g., detachable storage, printers, and so on).

Processor 102 may be one or more of any type of computer processing element, such as a central processing unit (CPU), a co-processor (e.g., a mathematics, graphics, or encryption co-processor), a digital signal processor (DSP), a network processor, and/or a form of integrated circuit or controller that performs processor operations. In some cases, processor 102 may be one or more single-core processors. In other cases, processor 102 may be one or more multi-core processors with multiple independent processing units. Processor 102 may also include register memory for temporarily storing instructions being executed and related data, as well as cache memory for temporarily storing recently used instructions and data.

Memory 104 may be any form of computer-usable memory, including but not limited to random access memory (RAM), read-only memory (ROM), and non-volatile memory (e.g., flash memory, hard disk drives, solid state drives, compact discs (CDs), digital video discs (DVDs), and/or tape storage). Thus, memory 104 represents both main memory units, as well as long-term storage. Other types of memory may include biological memory.

Memory 104 may store program instructions and/or data on which program instructions may operate. By way of example, memory 104 may store these program instructions on a non-transitory, computer-readable medium, such that the instructions are executable by processor 102 to carry out any of the methods, processes, or operations disclosed in this specification or the accompanying drawings.

As shown in Figure 1, memory 104 may include firmware 104A, kernel 104B, and/or applications 104C. Firmware 104A may be program code used to boot or otherwise initiate some or all of computing device 100. Kernel 104B may be an operating system, including modules for memory management, scheduling, and management of processes, input / output, and communication. Kernel 104B may also include device drivers that allow the operating system to communicate with the hardware modules (e.g., memory units, networking interfaces, ports, and buses) of computing device 100. Applications 104C may be one or more user-space software programs, such as web browsers or email clients, as well as any software libraries (e.g., scheduling algorithms and/or random number generators) used by these programs. Memory 104 may also store data used by these and other programs and applications.

Network interface 106 may take the form of one or more wireline interfaces, such as Ethernet (e.g., Fast Ethernet, Gigabit Ethernet, and so on). Network interface 106 may also support communication over one or more non-Ethernet media, such as coaxial cables or power lines, or over wide-area media, such as Synchronous Optical Networking (SONET) or digital subscriber line (DSL) technologies. Network interface 106 may additionally take the form of one or more wireless interfaces, such as IEEE 802.11 (Wifi), BLUETOOTH®, global positioning system (GPS), or a wide-area wireless interface. However, other forms of physical layer interfaces and other types of standard or proprietary communication protocols may be used over network interface 106. Furthermore, network interface 106 may comprise multiple physical interfaces. For instance, some embodiments of computing device 100 may include Ethernet, BLUETOOTH®, and Wifi interfaces.

Input / output unit 108 may facilitate user and peripheral device interaction with computing device 100. Input / output unit 108 may include one or more types of input devices, such as a keyboard, a mouse, a touch screen, and so on. Similarly, input / output unit 108 may include one or more types of output devices, such as a screen, monitor, printer, and/or one or more light emitting diodes (LEDs). Additionally or alternatively, computing device 100 may communicate with other devices using a universal serial bus (USB) or high-definition multimedia interface (HDMI) port interface, for example.

In some embodiments, one or more computing devices like computing device 100 may be deployed to support the embodiments herein. The exact physical location, connectivity, and configuration of these computing devices may be unknown and/or unimportant to client devices. Accordingly, the computing devices may be referred to as "cloud-based" devices that may be housed at various remote data center locations.

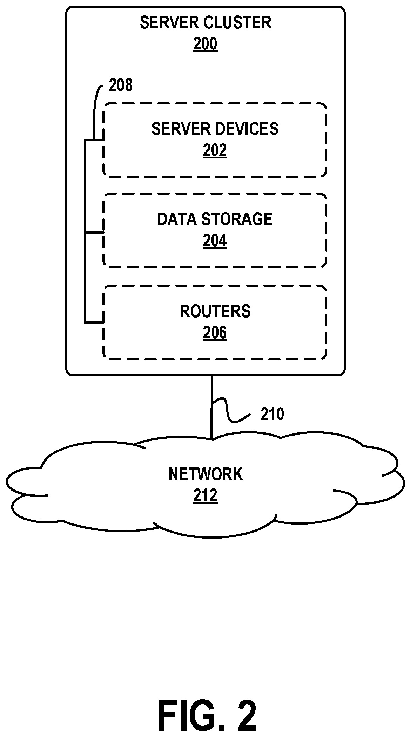

Figure 2 depicts a cloud-based server cluster 200 in accordance with example embodiments. In Figure 2, operations of a computing device (e.g., computing device 100) may be distributed between server devices 202, data storage 204, and routers 206, all of which may be connected by local cluster network 208. The number of server devices 202, data storages 204, and routers 206 in server cluster 200 may depend on the computing task(s) and/or applications assigned to server cluster 200.

For example, server devices 202 can be configured to perform various computing tasks of computing device 100. Thus, computing tasks can be distributed among one or more of server devices 202. To the extent that these computing tasks can be performed in parallel, such a distribution of tasks may reduce the total time to complete these tasks and return a result. For purposes of simplicity, both server cluster 200 and individual server devices 202 may be referred to as a "server device." This nomenclature should be understood to imply that one or more distinct server devices, data storage devices, and cluster routers may be involved in server device operations.

Data storage 204 may be data storage arrays that include drive array controllers configured to manage read and write access to groups of hard disk drives and/or solid state drives. The drive array controllers, alone or in conjunction with server devices 202, may also be configured to manage backup or redundant copies of the data stored in data storage 204 to protect against drive failures or other types of failures that prevent one or more of server devices 202 from accessing units of data storage 204. Other types of memory aside from drives may be used.

Routers 206 may include networking equipment configured to provide internal and external communications for server cluster 200. For example, routers 206 may include one or more packet switching and/or routing devices (including switches and/or gateways) configured to provide (i) network communications between server devices 202 and data storage 204 via local cluster network 208, and/or (ii) network communications between server cluster 200 and other devices via communication link 210 to network 212.

Additionally, the configuration of routers 206 can be based at least in part on the data communication requirements of server devices 202 and data storage 204, the latency and throughput of the local cluster network 208, the latency, throughput, and cost of communication link 210, and/or other factors that may contribute to the cost, speed, fault-tolerance, resiliency, efficiency, and/or other design goals of the system architecture.

As a possible example, data storage 204 may include any form of database, such as a structured query language (SQL) database. Various types of data structures may store the information in such a database, including but not limited to tables, arrays, lists, trees, and tuples. Furthermore, any databases in data storage 204 may be monolithic or distributed across multiple physical devices.

Server devices 202 may be configured to transmit data to and receive data from data storage 204. This transmission and retrieval may take the form of SQL queries or other types of database queries, and the output of such queries, respectively. Additional text, images, video, and/or audio may be included as well. Furthermore, server devices 202 may organize the received data into web page or web application representations. Such a representation may take the form of a markup language, such as the hypertext markup language (HTML), the extensible markup language (XML), or some other standardized or proprietary format. Moreover, server devices 202 may have the capability of executing various types of computerized scripting languages, such as but not limited to Perl, Python, PHP Hypertext Preprocessor (PHP), Active Server Pages (ASP), JAVASCRIPT®, and so on. Computer program code written in these languages may facilitate the providing of web pages to client devices, as well as client device interaction with the web pages. Alternatively or additionally, JAVA® may be used to facilitate generation of web pages and/or to provide web application functionality.

## II. Cloud Infrastructure Embodiment

This embodiment is an example of an improved probabilistic real-time control system.

As described in the context of Figure 2, public or private cloud-based computing infrastructure may consist of a number of computing resources (e.g., processors, memory, storage, and/or networking) that are provided for purposes of satisfying short-term or long-term computing needs of individual or entities. For example, an individual or an enterprise may register an account with a cloud infrastructure provider for a use of computing resources within the cloud infrastructure. The account may provide this user with access to a specific amount of computing resources per unit of time (e.g., 100 hours of processor utilization per month, 5 gigabytes of storage, etc.).

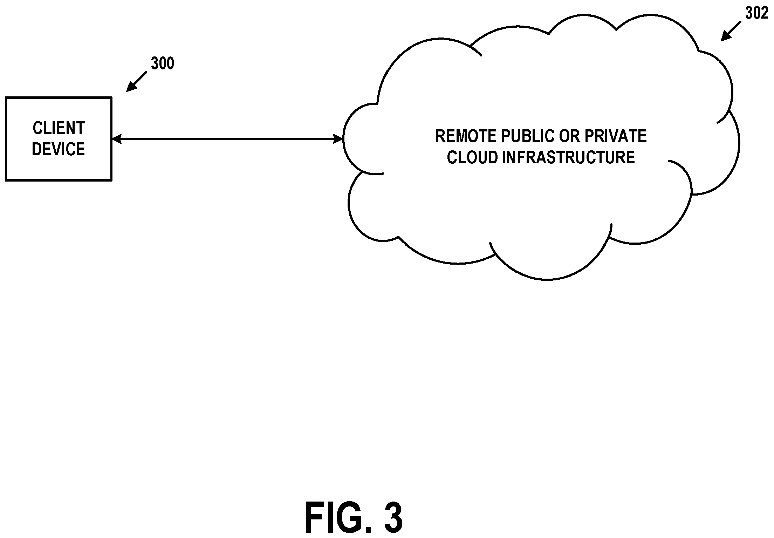

Figure 3 depicts such an arrangement. Client device 300 may access and use computing resources of remote public or private cloud infrastructure 302. Public cloud infrastructure may include cloud-computing resources that are available to the general public (e.g., AMAZON WEB SERVICES ®) while private cloud infrastructure might limit access to a specific set of individuals or enterprises. Client device 300 may be connected to this infrastructure by way of a network, such as the Internet or a private network.

There typically is a cost to the user for use of computing resources in cloud infrastructure, which may be a flat fee per unit of time for an amount of the computing resources used. For instance, the user might be charged $10 per month for 80 hours of processor utilization by a single processor for that month. Thus, there is a relationship between cost (*c*) and computing resources provided (*r*) that is governed by a proportionality factor $\rho$, where:

$$\rho = \frac{r}{c}$$

The value of $\rho$ is determined by design (e.g., 8 hours of processor utilization for a single processor per dollar in the above example).

Notably, instead of a processor, the computing resource may be a processor core, a set of processors, a virtual machine, or some other unit of computation. Further, *p* and *r* may be probabilistic because modern computing systems are non-deterministic, and task completion times may vary due to processing loads, communication overheads, scheduling latencies, and other factors. Thus, *p* and *r* may represent average values to which the cloud infrastructure is expected to converge over time.

A challenge for these cloud-computing systems is how to process tasks rapidly. For example, a user may wish to have access to additional (e.g., parallel) computing resources for a period of time. In another example, the user may submit a task that can be processed in parallel by the computing resources. Such parallelization can be advantageous because by increasing the computing resources dedicated to the task, the time required to complete the task decreases. For instance, a parallelizable task that takes eight hours to be performed by one processor could potentially be completed in four hours by two processors, in two hours by four processors, or in one hour by eight processors.

Assuming that these computing resources are available, it is desirable for the cloud infrastructure to be able to allocate them to the user without affecting (or having a minimal impact on) the value of *p* as well as the computing resources already allocated to the user and/or other users. Further, the user might not even know that options for gaining access to these additional resources are available.

The embodiments described in this section address these and other concerns by facilitating dynamic allocation of computing resources. Particularly, this occurs in three phases: (i) analysis of submitted tasks by cloud infrastructure and identification of those that will overload the user's capacity, but can be carried out at least partially in parallel, (ii) automatically presenting the user with options for allocating additional computing resources for task parallelization, and (iii) upon request from the user, carrying out a task in parallel on the additional computing resources.

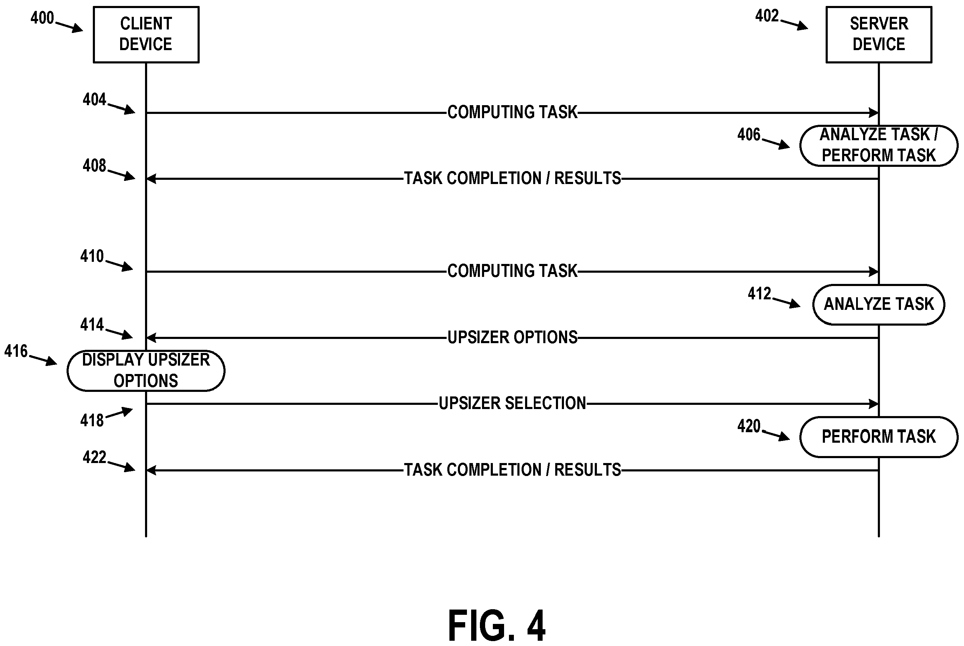

Figure 4 depicts a message flow diagram with an illustrative example. In Figure 4, client device 400 may be the same device as client device 300, and is in communication with server device 402. Server device 402 may be a component of remote public or private cloud infrastructure 302. For instance, server device 402 may be an administrative interface (e.g., a web interface) through which client device 400 can submit tasks to remote public or private cloud infrastructure 302. These tasks may take on a number of forms, such as training a machine learning model, performing a finite element analysis on a representation of a physical structure, simulating the performance of a self-driving vehicle, and so on.

At step 404, client device 400 transmits a representation of a computing task to server device 402. This representation may include data, software logic, instructions, or some combination thereof. In some cases, the computing task may reference data, software logic, instructions, or some combination thereof already stored at or accessible to server device 402.

At step 406, server device 404 may analyze this task. One possible form of analysis may be to determine the amount of parallelization that the task supports. This could take the form of determining how much of the task can be carried out in parallel and how much must be serialized. Some tasks are explicitly made parallel by design, such as through use of multiple threads of execution. Other tasks may be implicitly made parallel by recognizing that certain aspects of the task can be performed independent of other aspects. As an example of the latter, training data for a machine learning model could be broken into several pieces, used independently for training, and then combined once each piece of the data has been used. As another example, different parts of a simulation may be able to be performed independently, again with results combined when these parts complete. The task analysis may involve parsing any source code of the program logic submitted with or associated with the task, and/or identifying pre-configured program logic that the cloud infrastructure will employ to perform the task that is inherently parallel. Nonetheless, not all tasks can be parallelized and parallelization of some tasks that can be parallelized may not result in a significant reduction in time to perform the tasks. Thus, in some cases, the analysis could determine that parallelization is not viable or recommended.

In any event, it is assumed that the computing task provided in step 404 cannot or should not be parallelized. Therefore, the cloud infrastructure performs this task serially.

At step 408, server device 402 transmits an indication of task completion and/or task results to client device 400. This indication may include a result of performing the task, such as a number, a data set, a recommendation, a report, etc.

At step 410, client device 400 transmits a representation of another computing task to server device 402. At step 412, server device 404 may analyze this task. A result of the analysis is that the task can be parallelized. The analysis may also provide a number of options for parallelization. Particularly, the task may be able to be parallelized so that it uses up to $p$ processors with associated reductions of overall processing time. As noted above, an example parallelizable task that takes eight hours to be performed by one processor could potentially be completed in four hours by two processors, in two hours by four processors, or in one hour by eight processors.

At step 412, server device 402 may provide these "UPSIZER" options for parallelization to client device 400. Server device 402 may do so by way of a web interface listing each UPSIZER option and an associated additional cost. These additional costs may be in multiples of the base cost to perform the task.

Continuing the example above, suppose that $\rho$ is fixed at 8 hours of single-processor processing time per \$1 and that the task, if not parallelized, will require 8 hours of processing time. Server device 402 may offer the following UPSIZER options to parallelize the task: a 2x parallelization boost for \$2 (resulting in a completion time of four hours), a 4x parallelization boost for \$4 (resulting in a completion time of two hours), and/or an 8x parallelization boost for \$8 (resulting in a completion time of one hour). In some embodiments, this offer may be provided out of band to the user of client device 400, such as by way of email or text message.

Note that in these examples, the cost of each UPSIZER option is based on the value of $\rho$. In other words:

$$\rho = \rho_{upsizer} = \frac{r_{upsizer}}{c_{upsizer}}$$

Therefore:

$$c_{upsizer} = \rho r_{upsizer}$$

Where $r_{upsizer}$ represents the computing resource (e.g., the number of processors to use for the task).

Advantageously, providing the UPSIZER options allows the user to make an informed decision regarding the performance of the task. It may be desirable for the task to be completed in 1 hour rather than the expected 8 hours, and the user may select that UPSIZER option. Further, placing a cost on each option helps preserve resources of the cloud infrastructure. Put another way, if additional resource utilization was not associated with a cost, it is likely that the cloud infrastructure would frequently run out of capacity due to overuse. Thus, this embodiment improves management and efficient use of computational resources while reducing the likelihood of long delays in task completion. In other words, this embodiment allows the user's task to complete rapidly when the appropriate computational resources are available.

At step 416, client device 400 displays the UPSIZER options to the user. As noted, this may be by way of a web interface, text message, or some other medium. The user may select one of these options or decline all of them,

At step 418, client device 400 transmits a selection of one of the UPSIZER options to server device 402. At step 420, server device 402 may cause the task to be performed in accordance with the selected UPSIZER option. Though not shown, server device 402 may also charge the user's account at this time. At step 422, server device transmits an indication of task completion and/or task results to client device 400. As noted, this indication may include a result of performing the task, such as a number, a data set, a recommendation, a report, etc.

III. **Network Access Embodiment**

This embodiment is also an example of an improved probabilistic real-time control system.

Network service providers are entities that facilitate network access for client devices. The client devices may be fixed or mobile computers (e.g., desktop computers, laptop computers, mobile phones, tablets, etc.) for which access to networks such as the Internet is desirable. Network service providers may offer their services to users in a workplace, at home, in airports, in hotels, on public transportation, or from virtually anywhere by way of a wide-area wireless network (e.g., 4G or 5G technologies).

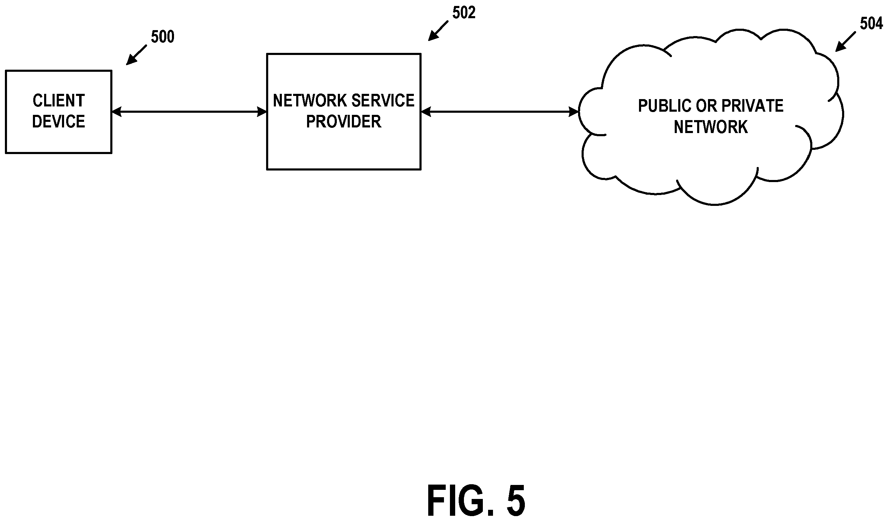

Figure 5 depicts such an arrangement. Client device 500 may be connected by way of network service provider 502 to public or private network 504. Client device 500 could be a wireless or wireline device, and network service provider 502 may represent a number of computing components, possibly including one or more wireless access points, routers, databases, gateway, links, and so on.

There typically is a cost to the user of client device 500 for obtaining network access by way of network service provider 502. This may be a flat fee for a particular amount of capacity per unit of time. For instance, the user might be charged \$5 per hour for 1 megabit per second of capacity. Thus, there is a relationship between cost ($c$) and capacity provided ($r$) that is governed by a proportionality factor $\rho$, where:

$$\rho = \frac{r}{c}$$

The value of $\rho$ is determined by design (e.g., 12 minutes of network capacity at 1 megabit per second per dollar in the above example).

Notably, $\rho$ and $r$ may be probabilistic because packet-switched networks are non-deterministic, and available capacity may vary due to the overall capacity of network service provider 502 being shared with other client devices. Thus, $\rho$ and $r$ may represent average values to which the capacity for client device 500 is expected to converge over time.

A challenge for these network service providers is how to utilize excess capacity to provide faster data transfer speeds to users when the users might want to take advantage of such speeds. For example, a user may wish to have access to additional capacity for a period of time so that they can engage in a video conference or transfer one or more large files.

Assuming that this capacity is available, it is desirable for the cloud infrastructure to be able to allocate it to the user without affecting (or having a minimal impact on) the value of $\rho$ as well as the capacity already allocated to the user and/or other users. Further, the user might not even know that options for gaining access to this additional capacity is available.

The embodiments described in this section address these and other concerns by facilitating dynamic allocation of network capacity. Particularly, this occurs in three phases: (i) analysis of a user's capacity utilization over a period of time, (ii) automatically or upon request presenting the user with options for allocating additional capacity, and (iii) upon selection by the user of one of these options, providing the additional capacity.

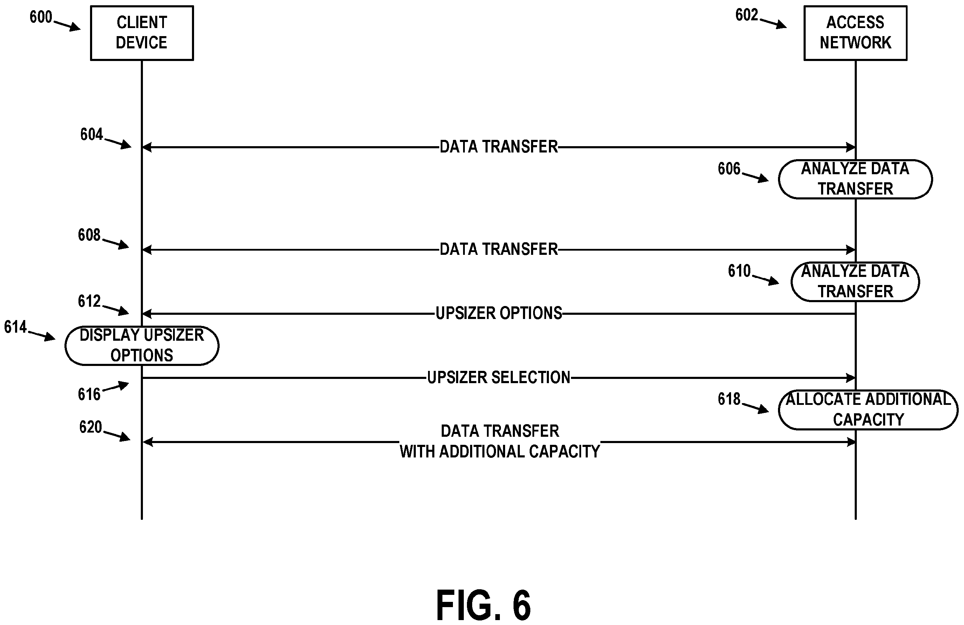

Figure 6 depicts a message flow diagram with an illustrative example. In Figure 6, client device 600 may be the same device as client device 300, and has been granted network access by way of access network 602. Access network 602 may be part of an Internet service provider, for example. Further, access network 602 may contain an administrative interface (e.g., a web interface) through which client device 600 can configure parameters of the service that is provided by access network 602 (e.g., the capacity).

At step 604, client device 600 is engaged in data transfer by way of access network 602. This data may be associated with any kind of application or use, such as web browsing, email, audio or video conference, file transfer, streaming, etc.

At step 606, access network 602 may analyze this data transfer to determine whether to offer additional network capacity to the user of client device 600. For example, access network 602 may determine whether the data transfer has been above a pre-determined threshold of the user's assigned capacity (e.g., 80%, 90%) for more than a pre-determined threshold amount of time (e.g., 1 minute, 5 minutes). At step 606, it is assumed that access network 602 determines not to offer additional network capacity, and the data transfer continues in accordance with its existing parameters.

At step 608, client device 600 is engaged in a further data transfer by way of access network 602. At step 610, access network 602 may analyze this data transfer to determine whether to offer additional network capacity to the user of client device 600. This time, access network 602 determines to offer additional network capacity.

At step 612, access network 602 may provide "UPSIZER" options for additional capacity to client device 600. Access network 602 may do so by way of a pushed web interface listing each UPSIZER option and an associated additional cost that is configured to pop up on the user interface of client device 600. In some embodiments, this offer may be provided out of band to the user of client device 600, such as by way of email or text message. These additional costs may be in multiples of the base cost of network capacity.

Continuing the example above, suppose that $\rho$ is fixed at 12 minutes of network capacity at 1 megabit per second per dollar. Access network 602 may offer the following UPSIZER options: a 12-minute 2x capacity boost for $1, a 12-minute 5x capacity boost for $4, and/or a 12-minute 10x capacity boost for $9. UPSIZER options for other durations of time may also be available.

Note that in these examples, the cost of each UPSIZER option is based on the value of $\rho$ and the amount paid for capacity so far. In other words:

$$\rho = \rho_{upsizer} = \frac{r_{upsizer}}{c_{upsizer}}$$

Therefore:

$$c_{upsizer} = \rho r_{upsizer}$$

Where $r_{upsizer}$ represents the additional capacity. Thus, a 2x boost results in twice the capacity for the user, but only costs $1 because it only adds another 1x of capacity. As an example, if the user's base capacity is 1 megabit per second, the 2x boost results in the user's total capacity being 2 megabits per second. But the additional cost is only $1, which is proportional to the amount of additional capacity per $p$.

Advantageously, providing the UPSIZER options allows the user to make an informed decision regarding how much additional capacity (if any) they use to facilitate their data transfer needs. As an example, it may be desirable for a user to be able synchronize multiple files on client device 600 with a cloud-based server in a rapid fashion so that the user can then work in a disconnected mode for a period of time. Or, if the user is engaging in a video conference with poor quality, the user may want to dynamically obtain additional capacity to improve the video quality.

Further, placing a cost on each UPSIZER option helps preserve capacity of access network 602. Put another way, if additional capacity was not associated with a cost, it is likely that the access network 602 would frequently run out of capacity due to overuse. Thus, this embodiment improves management and efficient use of network capacity while dynamically facilitating user needs for additional capacity. In other words, this embodiment allows the user's data transfers to complete rapidly when the appropriate network capacity is available.

At step 616, client device 600 transmits the user's UPSIZER selection to access network 602. Accordingly, at step 618, access network 602 allocates the additional capacity specified by this UPSIZER option. Though not shown, access network 602 may also charge the user's account at this time. At step 620, the data transfer continues with the additional capacity as allocated.

## IV. Real-Time Gaming Embodiment

These embodiments are also examples of improved probabilistic real-time control systems.

In existing wagering games, such as slot-based or reel-based games, a player provides inputs prior to initiating an iteration of gameplay. These inputs may include the price and/or size of a wager or bet, the number of pay lines to play, whether an enhanced feature is activated, and the like. The inputs are then used to provide an output (for example, in the form of a win or other result to the player), depending on a random calculation performed by a game system. This is an example of what will be referred to herein as the "base game" of a wagering game (i.e., the base feature of a probabilistic real-time control system).

A player may trigger special features during play of the base game, for example, a bonus game (i.e., an enhanced feature of a probabilistic real-time control system) that provides free iterations (e.g., rounds or spins) of the game. The triggering may be caused by the player collecting tokens awarded by the base game, special pre-determined symbols, values, or patterns appearing in the base game output, or other events and/or factors. A return (payout) of the free iterations may be provided to the player based on the same input wager as the original iteration or by way of some other mechanism. If, for example, the free iterations were triggered while a player's base game wager was $1, each free iteration may be considered to have a wager value of $1. As a result, the return of the free iterations is linked to the original $1 wager value.

The embodiments in this section involve adapting gaming systems to accommodate mid-iteration additional wagering on bonus games while maintaining a probabilistically static ratio between returns and wager values.

## A. Example Gaming Machine

As an example embodiment of a wager game, a reel-based game may take the form of a video gaming machine. This could be dedicated gaming machine located in a casino or a distributed gaming system facilitated by a client device and a server device connected by way of a computer network. Regardless, the gaming machine includes a graphical user interface (GUI) at the player's location, on either a dedicated gaming machine or a client device. The user interacts with the wager game by way of the GUI and/or other input/output mechanisms.

Such a GUI may emulate a mechanical slot machine. Thus, the GUI may display an image of one or more reels with each reel including a fixed pattern of symbols distributed around its circumference. Alternatively, the GUI may present symbols in a matrix arrangement without a visual representation of a reel. For instance, the GUI may display five reels each showing three symbols at a time (or a 5x3 matrix of symbols). One or more pay lines may be present, such as horizontal line(s) disposed across a various points of each of the three reels.

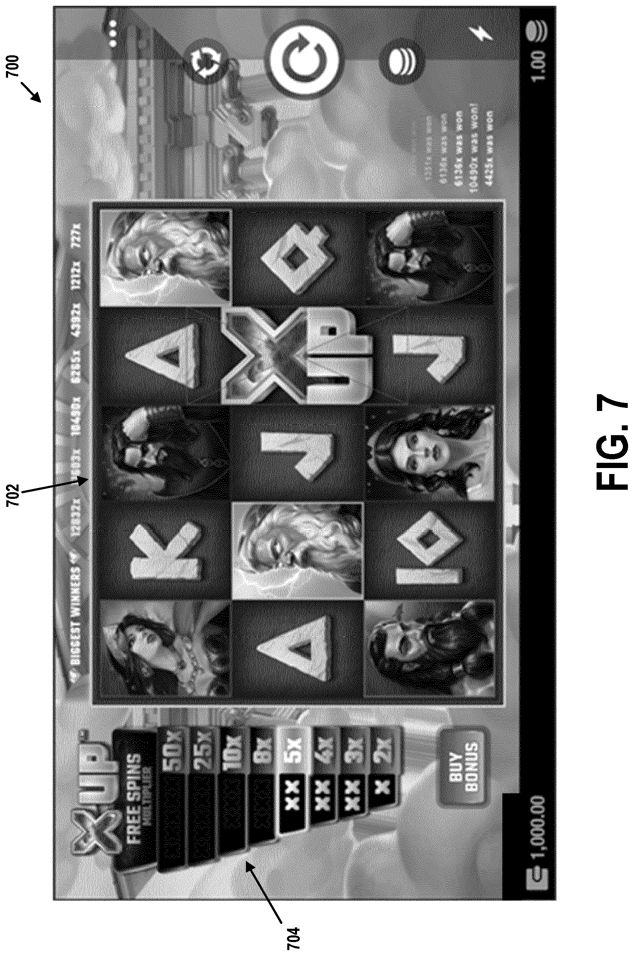

An example of such a GUI is shown in Figure 7. Notably, GUI 700 displays an interface for a reel-based game including reels 702 in the form of a matrix.

When a player places a wager (e.g., by actuating a button on the GUI or a physical button on the machine), the player is allowed to "spin" the reels to generate a new random combination of symbols. Each reel then comes to rest, typically with either one of the symbols, or a space in between symbols, possibly in alignment with a pay line. Each symbol may change during such a simulated spin according to the fixed pattern of symbols on the reels or the pattern of the matrix, even if this "spin" does not result in the GUI displaying any reels actually spinning. An outcome with a predefined winning symbol or a predefined winning combination of symbols that are aligned with a pay line can result in the player winning and receiving a payout. In the context of reel-based games, the terms "iteration" and "spin" may be used interchangeably unless context suggests otherwise.

A computer software program may randomly select one or more symbols in response to a player's spin. This selection may be made by way of a random number generator (RNG) implemented in software and/or hardware, and random number(s) produced by the RNG may determine the outcome of the spin. The gaming machine then generates the corresponding visual representation of the spin and the resulting outcome on the GUI. On a dedicated gaming machine, the RNG and the display may be disposed within or in a manner that is coextensive with the dedicated gaming machine. In a client/server gaming machine, the RNG may be disposed within the server device and the display may be disposed within the client device. Thus, the server device may generate random numbers and transmit these (or representations of corresponding spin outcomes) to the client device, and the client device may update the GUI accordingly.

As noted, a wagering game such as a reel-based game may feature two different stages - a base game and a bonus game. The base game may allow players to collect tokens that change a multiplier that will be applied to free spins in a bonus game when the player triggers (activates) the bonus game. These tokens may be special symbols (e.g., wild symbols or some other form of predetermined symbol) that increment a counter over time. The counter may start at 1 (representing a 1x multiplier) and then increment to 2 (representing a 2x multiplier), 3 (representing a 3x multiplier), and so on. This multiplier may be displayed to the player during spins of the game, perhaps alongside, above, or below reels or matrix. In Figure 7, multiplier column 704 of GUI 700 shows a free spins multiplier with the current multiplier value (5x) highlighted.

The player may manually trigger the bonus game at some point, such as once the player has qualified for the bonus game. Alternatively, the bonus game may be triggered automatically upon qualification. The bonus game may allow the player to engage in one or more free spins. The player does not have to make further wagers during these spins, and as noted above, the payouts for free spins can be based on the player's most recent wager for example.

In various embodiments, bonus games could be implemented in other ways. For example, instead of or in addition to providing free spins, a bonus game could offer more favorable returns than the base game on some number of future wagers, or could be a completely different game of chance with which the player can engage. More generally, the term "bonus game" herein may refer to any type of game or feature triggered during play of a base game, or triggered in some other fashion.

**B. Return to Player (RTP)**

Each wager game typically has a return-to-player (RTP) characteristic for the overall game that is static or at least relatively static. The RTP is the expected return of a game over time, and is usually between approximately 80% and 98%. If a wager game's RTP is 96.25% for example, the player can expect a return of $96.25 for every $100.00 wagered, assuming that the player has played enough iterations of the game. Put another way, the RTP of a wager game determines the proportionality between wagers and expected returns, and can be expressed as:

$$RTP = \frac{return}{wager}$$

Notably, RTP is a probabilistic property. The return of any given iteration of a wager game is still governed by the wager game's mechanics and its RNG. Given enough iterations, the actual RTP converges on the designated RTP value due to the law of large numbers. In other words, for $m$ iterations of a game, where $RTP_k$ is the actual RTP for the kth iteration (and could be greater than 1) and the designated RTP is $RTP$, the following property holds:

$$\lim_{m \to \infty} \frac{1}{m} \sum_{k=1}^{m} RTP_k = RTP$$

RTP values of wager games are published to the players and are often mandated to be accurate by law or regulation. Thus, providing a robust mechanism for maintaining a given RTP is desirable.

The RTP can be used to determine the probabilities and returns of various outcomes of a wager game. Thus, an expected RTP may be implemented as a pay table listing all possible outcomes of an iteration of the game and the associated probabilities and returns thereof. For a wager game with a set of $n$ outcomes with respectively associated returns $x_1, ..., x_n$ and probabilities $p_1, ..., p_n$ (where $0 \leq p_i \leq 1$ and $\Sigma_i p_i = 1$, a valid pay table should fit the equation:

$$\sum_{i=1}^{n} p_i x_i = RTP$$

As an example, consider a wager game in which each iteration is based on the roll of a single 6-sided fair die. Suppose further that this wager game is designed to have an RTP of 0.9. One possible pay table for this wager game is shown in Table 1.

**Table 1**

| Outcome | Probability | Return (multiplier) |
|---------|-------------|---------------------|
| One | 1/6 | 0.0 |
| Two | 1/6 | 0.0 |
| Three | 1/6 | 0.0 |
| Four | 1/6 | 0.4 |
| Five | 1/6 | 2.0 |
| Six | 1/6 | 3.0 |

It can be shown that this pay table adheres to the equation above. Notably, many other valid pay tables exist.
When a base game does not trigger a bonus game, the relation between wager, RTP, and expected returns are as given above for each iteration of the base game as well as the base game as a whole. But the calculations used to maintain a given RTP when a bonus game is introduced become more complicated.

**C. Bonus Game RTP**

When a bonus game is added to a base game, the RTP calculations are typically updated to account for the impact of bonus payouts. For example, a wagering game may include a base game and a bonus game, where the base game is designed to trigger the bonus game once ever $m$ iterations, on average, and provides an expected bonus game return of $r_{bonus}(w)$ for a base game wager of $w$. Further the expected return of the base game is $r_{base}(w)$ for a base game wager of $w$. Thus, the overall (total) RTP for the game is:

$$RTP_{total} = \frac{return_{total}}{wager_{total}} = \frac{m r_{base}(w) + r_{bonus}(w)}{mw}$$

For example, suppose that a goal is to have $RTP_{total}$ = 96.25%. If a bonus game is expected to be triggered one every 200 iterations and provide an average payout of 50 times the wager $w$, this additional payout forces the base game to have an effective RTP lower than $RTP_{total}$.
More specifically, the contribution of the bonus game to $RTP_{total}$ is:

$$RTP_{bonus} = \frac{r_{bonus}(w)}{mw} = \frac{50w}{200w} = 25\%$$

Then, the contribution of the base game to $RTP_{total}$ is:

$$RTP_{base} = (RTP_{total} - RTP_{bonus}) = (96.25\% - 25\%) = 71.25\%$$

Since it is also known that:

$$RTP_{base} = \frac{m r_{base}(w)}{mw} = \frac{r_{base}(w)}{w}$$

It follows that:

$$r_{base}(w) = 0.7125w$$

Thus, to achieve the desired value for $RTP_{total}$ the per-iteration RTP of the base game ($RTP_{base}$) is reduced to accommodate the returns provided by the bonus game. This can be implemented in the wagering game as either lower returns or higher wagers in the base game (or some combination thereof). Such a change can be undesirable because the relatively high number of base game iterations typically needed to trigger a bonus game. The player will have either to settle for lower returns during these iterations between bonus games or provide higher wagers to maintain base game returns at the same level.

Notably, this same logic applies to wagering games that provide more than one bonus game. The equations above can be expanded to model the impact of multiple bonus games on returns.

**D. "Booster" Features**

Some wagering games may use "booster" features that allow a player to unlock bonus games or more favorable versions of bonus games should the player trigger such bonus games during play of the base game. The drawback of such game booster techniques is that every base game iteration (i.e., every input required for play of the base game) is relatively expensive. Due to the low likelihood of triggering a desired feature (e.g., a player may need to play a significant number of iterations of the base game before the bonus game is triggered, the player may be required to wager a higher amount per base game iteration to obtain a potential for a higher return during the bonus game.

As described above, a bonus game feature may statistically only be expected to trigger once every few hundred iterations of the base game. This is a result of game design. The high number of base game iterations to trigger a bonus game, and the additional price associated with a booster attached to each base game iteration, results in a significantly higher wager per base game iteration in order to potentially obtain the more favorable version of the bonus game. The wager for each iteration of the base game may be too high for a player's liking, particularly given the potential delay in seeing a return on such a higher wager.

**E. UPSIZER Feature**

Example embodiments provide an "UPSIZER" feature that may allow a user to choose to further wager at a stage when they are more likely to obtain an immediate return. Instead of continuous larger wagers for each iteration of the base game, the UPSIZER feature allows a user to make continuous smaller wagers for each iteration of the base game, with the option of adding a single large wager when the bonus game is triggered.

The UPSIZER feature changes known gameplay procedure in that it allows a player to add an additional wager during this gameplay - after as initial base game wager, but before a bonus game return is determined. This mechanism may work particularly well when a bonus game is triggered during gameplay. Take, for example, when free spins are triggered as a bonus game. While the player may have bet $1 at the time that free spins were triggered, the player may now be allowed to provide an additional wager to increase the value of each free spin. This may cause, for example, the value of each free spin to be $2 instead of $1, which leads to an increase in the potential return to the player. The wager value for bonus game should be calculated such that, given a desired or static RTP of the overall game, the expected return to the user is proportional the wager provided.

Some wagering games do allow a user to "buy a bonus game", where a player essentially just pays to initiate a bonus game. The UPSIZER feature is not the same. It does not buy access to a bonus game; instead, it adjusts the potential value of a bonus game to the player once such feature has already been triggered.

Regardless, when the bonus game is triggered, the player may be presented with an opportunity to engage the UPSIZER feature. As an example, the GUI may display the player's current multiplier (e.g., 3x) and give the player options to increase this multiplier (e.g., to 4x, 5x, 8x, 25x, or 50x) for a respectively associated wager value (e.g., $8, $10, $15, $50, $100, respectively). If the player selects one of these options, the multiplier is increased accordingly and the player is debited the associated wager value. In this manner, the player can increase the multiplier when it is likely to be advantageous to do so.

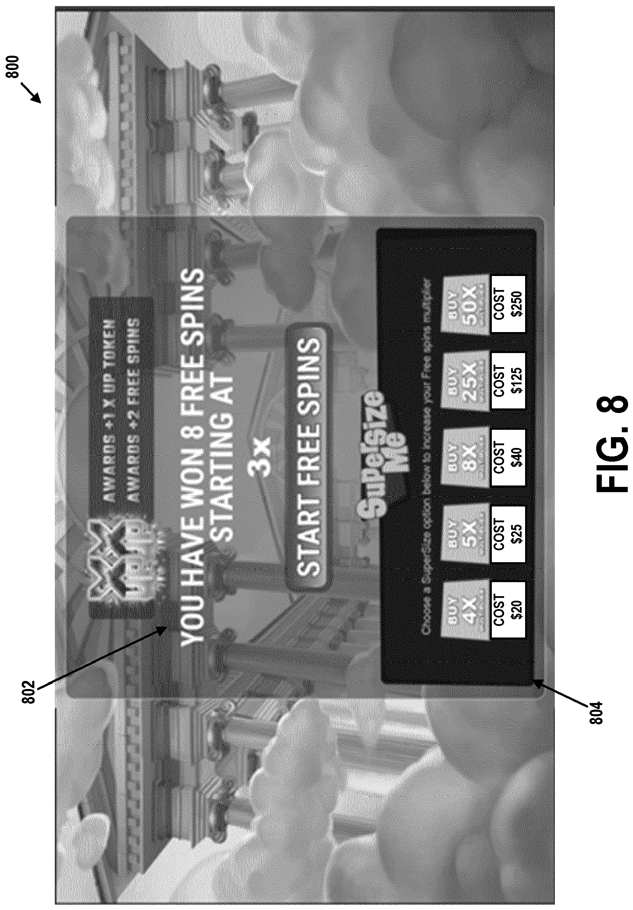

For instance, Figure 8 depicts GUI 800. GUI 800 includes message 802, indicating that the player has won 8 free spins at a multiplier of 3x, and that the player can actuate a button to start these free spins. GUI 800 also includes UPSIZER options 804, allowing the player to increase the multiplier as described above.

The UPSIZER feature also can be applied in many different scenarios, for example, increasing the number of awarded free spins, adding wild symbols to reels used during free spins, changing values on a pay table, and the like. Thus, the UPSIZER feature is not limited to just increasing a multiplier for a bonus game. Further, GUI 800 might or might not display the expected payout or result of selecting any of UPSIZER options 804.

### F. Technical Implementation

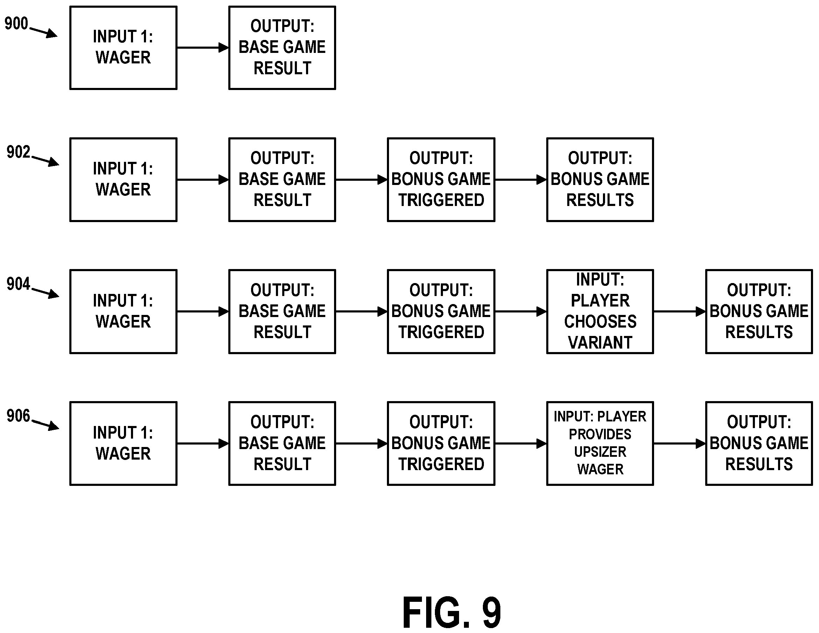

In order to implement the UPSIZER functionality, the flow of a normal wagering game is modified. Typically, wager games require a single input from players in order to initiate the transaction, after which the result can play out via some number of output events. This is illustrated by sequence 900 of Figure 9, in which the player provides input in the form of a wager and the gaming machine provides a base game result. Alternatively, sequence 902 of Figure 9 illustrates the player providing input in the form of a wager, the gaming machine providing a base game result, the gaming machine indicating that a feature has been triggered (e.g., a bonus game), and the gaming machine providing a result for that feature.

In some games, players can submit other inputs into the flow of a transaction that are not accompanied by a wager. An example of this would be a player choosing between two different variants of a bonus game. This is illustrated by sequence 904 of Figure 9, in which the player provides input in the form of a wager and the gaming machine provides a base game result. The gaming machine indicates that a bonus game has been triggered, the gaming machine allows the player to choose a variant of this bonus game (e.g., a type of a bonus game, but no new wager is required), and the gaming machine provides a result for the selected bonus game.

In order to achieve the desired functionality for the UPSIZER feature, a decision point within the flow of a transaction may be introduced, which may allow players to increase the wager after some output or result from the transaction has already been calculated and presented to the player. This is illustrated by sequence 906 of Figure 9, in which the player provides input in the form of a wager and the gaming machine provides a base game result. The gaming machine indicates that a bonus game has been triggered, the gaming machine allows the player to input an UPSIZER wager, and the gaming machine provides a result for the bonus game based on the UPSIZER wager.

For the UPSIZER feature, the fundamental RTP equation above may be rewritten as:

$$w_{upsizer} = \frac{r_{upsizer}(w_{upsizer})}{RTP_{total}}$$

Where $w_{upsizer}$ is the additional wager provided for the UPSIZER feature and $r_{upsizer}$ is the expected return of a bonus game with the UPSIZER feature. Note that the UPSIZER wager value provided by this equation ensures that the designated total RTP of the game is identical whether or not the player engages with the UPSIZER feature. The UPSIZER feature described by this equation does not consider whether there is standard bonus game return if the player does not engage with the UPSIZER feature. Thus, the UPSIZER feature can be combined with one or more bonus games such that the player is still able to obtain the "normal" bonus game return if the player does not engage with the UPSIZER feature.

In this combined game, the following values are design choices: $RTP_{total}$, $r_{upsizer}(w_{upsizer})$, $r_{bonus}(w)$, and $m$. Here it is assumed that $m$ is the same regardless of whether the bonus game is the standard bonus game or uses the UPSIZER feature. Given these design choices, which may be implemented through modifications of a pay table for example, it follows that:

$$w_{upsizer} = \frac{r_{upsizer}(w_{upsizer}) - r_{bonus}(w)}{RTP_{total}}$$

In other words, the wager needed to access the UPSIZER feature is based on the expected increase in return due to the UPSIZER feature over that of the standard bonus game. If there is no standard bonus game, the value of $r_{bonus}(w)$ can be set to 0 and the following calculations are still valid. Nonetheless, the formula above will ensure that the cost will create an RTP-neutral UPSIZER feature (i.e., the value of $w_{upsizer}$ will not impact the total RTP of the game).

Further, assuming that the UPSIZER feature is not selected, the contribution of the standard bonus feature to the overall RTP of the wagering game is:

$$RTP_{bonus} = \frac{r_{bonus}(w)}{mw}$$

And, also when the UPSIZER feature is not selected, the contribution of the base game to the overall RTP of the wagering game is:

$$RTP_{base} = (RTP_{total} - RTP_{bonus})$$

Based on similar reasoning, the contribution of the UPSIZER feature to the overall RTP of the wagering game could be calculated as follows:

$$RTP_{upsizer} = \frac{r_{upsizer}(w_{upsizer})}{mw + w_{upsizer}}$$

In this case, when the UPSIZER feature is selected, the contribution of the base game to the overall RTP of the wager game is:

$$RTP_{base+upsizer} = (RTP_{total} - RTP_{upsizer}) = \frac{RTP_{base}mw}{mw + w_{upsizer}}$$

The relationship between the second and third terms can be established algebraically based on the relationships given above.

This system also has the convenient property that the per-spin RTP of the base game with and without the UPSIZER feature is the same. Intuitively:

$$RTP_{base}^* = \frac{r_{base}(w)}{w} = RTP_{base}$$

Where $RTP_{base}^*$ is the per-spin RTP of the base game without the UPSIZER feature. The per-spin RTP of the base game with the UPSIZER feature can be derived as follows. The total expected return of the wagering game with the UPSIZER feature is the total amount wagered over $m$ spins multiplied by the total RTP:

$$(mw + w_{upsizer})RTP_{total}$$

Of this amount, $r_{upsizer}(w_{upsizer})$ is attributable to the UPSIZER feature, so that leaves the amount attributable to the base game as:

$$(mw + w_{upsizer})RTP_{total} - r_{upsizer}(w_{upsizer})$$

Thus:

$$RTP_{base+upsizer}^* = \frac{(mw + w_{upsizer})RTP_{total} - r_{upsizer}(w_{upsizer})}{mw}$$

Where $RTP_{base+upsizer}^*$ is the per-spin RTP of the base game with the UPSIZER feature. Note that divisor includes $m$, the number of spins to get a per-spin value, as well as w to normalize the quotient into a per-wager amount.

This can be rewritten as:

$$RTP^*_{base+upsizer} = \frac{mwRTP_{total} + w_{upsizer}RTP_{total} - r_{upsizer}(w_{upsizer})}{mw}$$

$$= \frac{mwRTP_{total} + r_{upsizer}(w_{upsizer}) - r_{bonus}(w) - r_{upsizer}(w_{upsizer})}{mw}$$

Simplification results in:

$$RTP^*_{base+upsizer} = \frac{mwRTP_{total} - r_{bonus}(w)}{mw}$$

Observing that $r_{bonus}(w) = mwRTP_{bonus}$, this can be rewritten as:

$$RTP^*_{base+upsizer} = \frac{mwRTP_{total} - mwRTP_{bonus}}{mw}$$

After cancelling the common $mw$ and observing that $RTP_{base} = (RTP_{total} - RTP_{bonus})$:

$$RTP^*_{base+upsizer} = RTP_{base} = RTP^*_{base}$$

Thus, the UPSIZER feature has no impact on the per-spin RTP. This results in players not having to accept a lower RTP or a higher per-spin wager in order to activate the UPSIZER feature. Further, the pay tables for the base game do not need to change when a bonus game with the UPSIZER feature is added. Therefore, software design is dramatically simplified.

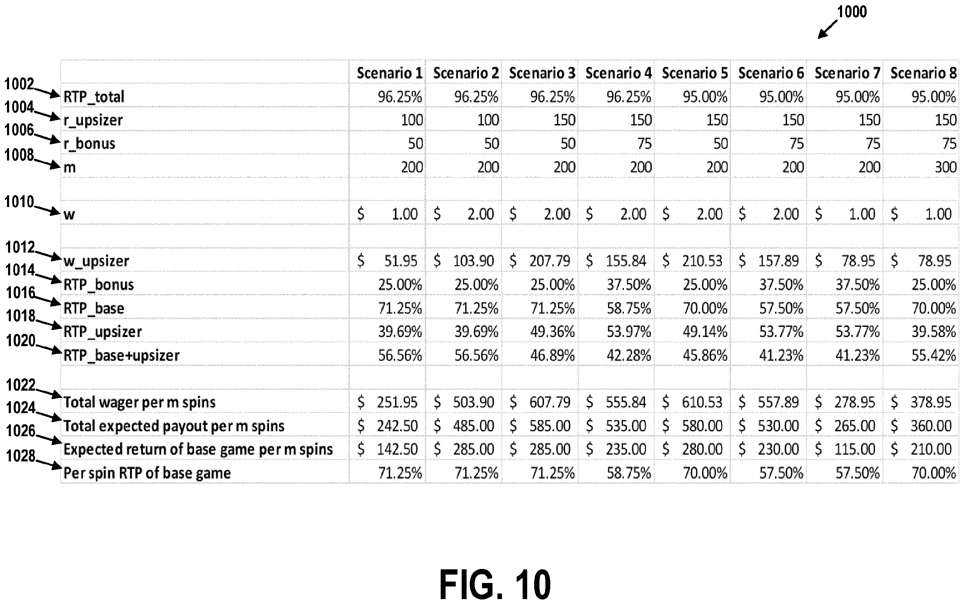

A number of example scenarios are provided in Figure 10. Table 1000 includes eight scenarios in columns that illustrate the impact of different wagering game design parameters and wager values. Wagering game design parameters $RTP_{total}$, $r_{upsizer}(w_{upsizer})$, $r_{bonus}(w)$, and $m$ are in rows 1002, 1004, 1006, and 1008, respectively, while wager value $w$ is in row 1010.

The values in all other rows are dependent variables based on expressions involving the wagering game design parameters and the wager values. Particularly, $w_{upsizer}$, $RTP_{bonus}$, $RTP_{base}$, $RTP_{upsize}$, and $RTP_{base+upsizer}$ are represented in rows 1012, 1014, 1016, 1018, and 1020, respectively. Rows 1022, 1024, 1026, and 1028 represent other dependent variables of possible interest, including $RTP^*_{base}$ in row 1028.

Notably, the results in Table 1000 demonstrate that changes to the wager value, $w$, do not impact $RTP_{bonus}$, $RTP_{base}$, $RTP_{upsizer}$, or $RTP_{base+upsizer}$ when all other parameters are held steady. On the other hand, changes to any of $RTP_{total}$, $r_{upsizer}(w_{upsizer})$, or $r_{bonus}(w)$ can impact these variables as well as $w_{upsizer}$. Further, these examples illustrate how the property $RTP^*_{base+upsizer} = RTP^*_{base}$ holds.

## G. Example Real-Time Transaction

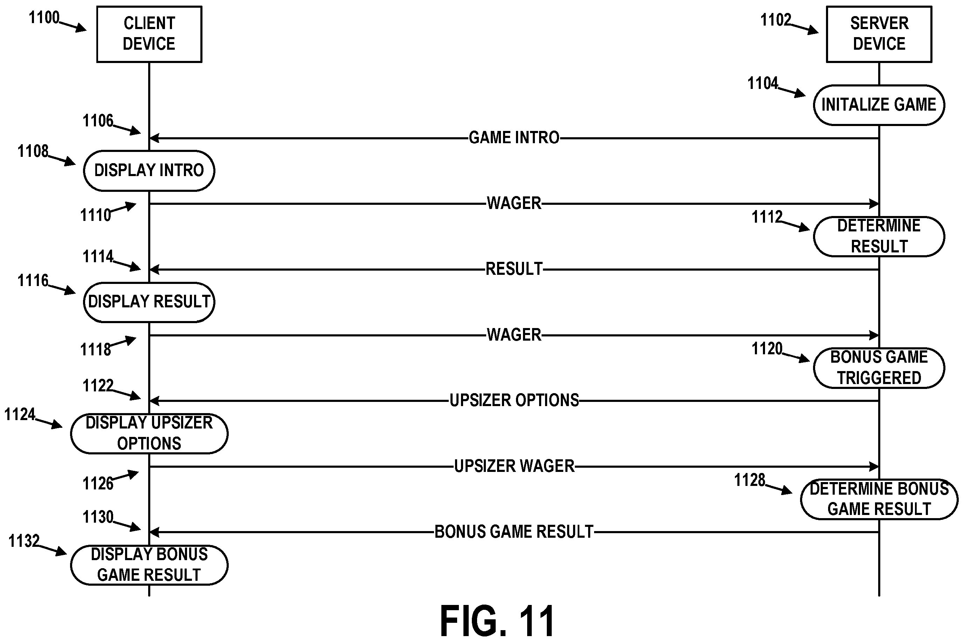

Figure 11 depicts a message flow diagram with an illustrative example of a real-time transaction. In Figure 11, client device 1100 is a gaming client, such as a laptop computer used by a player of the gaming system, and server device 1102 is a component of the gaming system. Client device 1100 and server device 1102 may be separated by one or more networks, or co-located in some fashion.

At step 1104, server device 1102 initializes the game. This may involve instantiating a new game with parameters associated with the player.

At step 1106, server device 1102 provides a game introduction to client device 1100. This may involve causing client device 1100 to display an opening animation, game rules, and so on.

At step 1108, client device 1100 may display this game introduction on its GUI.

At step 1110, client device 1100 may receive a wager from the player and provide this wager to server device 1102. The player's account may be debited by the value of the wager.

At step 1112, server device 1102 may determine a result based on the wager, the game's parameters, the state of the game, and possibly other factors. For example, server device 1102 may use its RNG to generate one or more random numbers, and then look up a result in a pay table based on these random numbers.

At step 1114, server device 1102 may provide the result to client device 1100.

At step 1116, client device 1100 may display the result on its GUI. For example, client device 1100 may display an animation of a spin of a reel-based game with the outcome of the spin (the symbols displayed on the GUI) being determined by the result. If the result is a winning combination of symbols, the client's account may be credited by the amount of the win.

At step 1118, client device 1100 may receive another wager from the player and provide this wager to server device 1102.

At step 1120, server device 1102 may determine that the bonus game is triggered. For example, the gaming system may be designed such that the bonus game is triggered once every m spins.

At step 1122, server device 1102 may provide a number of UPSIZER options, along with their respective costs, to client device 1100. As noted, these UPSIZER options can take a number of forms, such as additional free spins, an increased multiplier, a modified pay table, and so on. In various implementations, the cost of an UPSIZER option is proportional to the expected return of that UPSIZER option in accordance with the total RTP of the wagering game.

At step 1124, client device 1100 may display the UPSIZER options and their associated costs on its GUI, and prompt the player to either select one of these options or decline all of the options.

At step 1126, client device 1100 may receive, from the player, a selection of one of these UPSIZER options and an UPSIZER wager equivalent to the associated cost. Client device 1100 may provide the UPSIZER wager to server device 1102. The player's account may be debited by the value of the UPSIZER wager.

At step 1128, server device 1102 may determine the bonus game result based on the UPSIZER wager, the game's parameters, the state of the game, and possibly other factors. For example, server device 1102 may use its RNG to generate one or more random numbers, and then look up a result in a pay table based on these random numbers.

At step 1130, server device 1102 may provide the bonus game result to client device 1100.

At step 1132, client device 1100 may display the bonus game result on its GUI. For example, client device 1100 may display an animation of one or more rounds of the bonus game with the outcome of these rounds being determined by the bonus game result. If the result is a winning outcome, the client's account may be credited by the amount of the win.

Notably, it is expected that there may be many spins of the base game that do not trigger the bonus game for each spin that does. But other possibilities exist.

### V. Example Operations

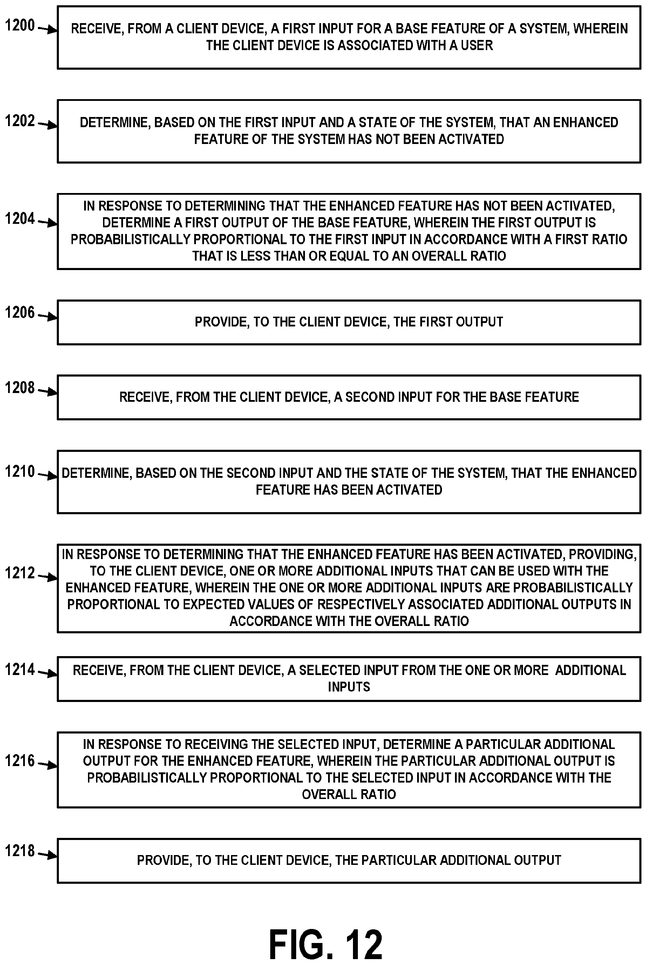

Figure 12 is a flow chart illustrating an example embodiment. The process illustrated by Figure 12 may be carried out by a computing device, such as computing device 100, and/or a cluster of computing devices, such as server cluster 200. However, the process can be carried out by other types of devices or device subsystems. For example, the process could be carried out a laptop or a tablet device.

The embodiments of Figure 12 may be simplified by the removal of any one or more of the features shown therein. Further, these embodiments may be combined with features, aspects, and/or implementations of any of the previous figures or otherwise described herein.

Block 1200 may involve receiving, from a client device, a first input for a base feature of a system, wherein the client device is associated with a user.

Block 1202 may involve determining, based on the first input and a state of the system, that an enhanced feature of the system has not been activated.

Block 1204 may involve, in response to determining that the enhanced feature has not been activated, determining a first output of the base feature, wherein the first output is probabilistically proportional to the first input in accordance with a first ratio that is less than or equal to an overall ratio.

Block 1206 may involve providing, to the client device, the first output.

Block 1208 may involve receiving, from the client device, a second input for the base feature.

Block 1210 may involve determining, based on the second input and the state of the system, that the enhanced feature has been activated.

Block 1212 may involve, in response to determining that the enhanced feature has been activated, providing, to the client device, one or more additional inputs that can be used with the enhanced feature, wherein the one or more additional inputs are probabilistically proportional to expected values of respectively associated additional outputs in accordance with the overall ratio.

Block 1214 may involve receiving, from the client device, a selected input from the one or more additional inputs.

Block 1216 may involve, in response to receiving the selected input, determining a particular additional output for the enhanced feature, wherein the particular additional output is probabilistically proportional to the selected input in accordance with the overall ratio.

Block 1218 may involve providing, to the client device, the particular additional output.

The system may be a remote computing infrastructure containing computing resources, wherein the first input is a first computational task, wherein the second input is a second computational task, wherein the state of the system includes computing resource utilization of the system, and wherein the enhanced feature allocates more of the computing resources to the client device than the base feature.

The system may be an access network containing network capacity, wherein the first input is a first data transfer, wherein the second input is a second data transfer, wherein the state of the system includes network capacity utilization of the system, and wherein the enhanced feature allocates more of network capacity to the client device than the base feature.

In some implementations, the first input, second input, each of the one or more additional inputs, the first output, and the particular additional output are representations of values.

In some implementations, determining the first output comprises producing, by way of a random number generator, the first output to be probabilistically proportional to the first input in accordance with the first ratio, wherein determining the particular additional output comprises producing, by way of the random number generator, the particular additional output to be probabilistically proportional to the selected input in accordance with the overall ratio.

In some implementations, providing the first output causes the client device to display an animation that resolves to a visual representation of the first output, wherein providing the particular additional output causes the client device to display a further animation that resolves to a further visual representation of the particular additional output.

In some implementations, providing the one or more additional inputs causes the client device to display a representation of the one or more additional inputs and the expected values of their respectively associated additional outputs.

In some implementations, the overall ratio is between 0.8 and 0.98.

In some implementations, the particular additional output is a probabilistic expected value that is design parameter of the system, wherein the selected input is proportional to the probabilistic expected value in accordance with the overall ratio.

In some implementations, the first ratio equals the overall ratio.

In some implementations, when no input from the one or more additional inputs is selected, the one or more processors are further configured to: determine a second output of the enhanced feature, wherein the second output is probabilistically proportional to the second input in accordance with a second ratio, wherein the overall ratio is based on a linear combination of the first ratio and the second ratio; and provide, to the client device, the second output.

In some implementations, the second output is a probabilistic expected value that is design parameter of the system.

## VI. Closing

The present disclosure is not to be limited in terms of the particular embodiments described in this application, which are intended as illustrations of various aspects. Many modifications and variations can be made without departing from its scope, as will be apparent to those skilled in the art. Functionally equivalent methods and apparatuses within the scope of the disclosure, in addition to those described herein, will be apparent to those skilled in the art from the foregoing descriptions. Such modifications and variations are intended to fall within the scope of the appended claims.

The above detailed description describes various features and operations of the disclosed systems, devices, and methods with reference to the accompanying figures. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations.

With respect to any or all of the message flow diagrams, scenarios, and flow charts in the figures and as discussed herein, each step, block, and/or communication can represent a processing of information and/or a transmission of information in accordance with example embodiments. Alternative embodiments are included within the scope of these example embodiments. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step or block that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical operations or actions in the method or technique. The program code and/or related data can be stored on any type of computer readable medium such as a storage device including RAM, a disk drive, a solid-state drive, or another storage medium.

The computer readable medium can also include non-transitory computer readable media such as non-transitory computer readable media that store data for short periods of time like register memory and processor cache. The non-transitory computer readable media can further include non-transitory computer readable media that store program code and/or data for longer periods of time. Thus, the non-transitory computer readable media may include secondary or persistent long-term storage, like ROM, optical or magnetic disks, solid-state drives, or compact disc read only memory (CD-ROM), for example. The non-transitory computer readable media can also be any other volatile or non-volatile storage systems. A non-transitory computer readable medium can be considered a computer readable storage medium, for example, or a tangible storage device.

Moreover, a step or block that represents one or more information transmissions can correspond to information transmissions between software and/or hardware modules in the same physical device. However, other information transmissions can be between software modules and/or hardware modules in different physical devices.

The particular arrangements shown in the figures should not be viewed as limiting. It should be understood that other embodiments could include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purpose of illustration and are not intended to be limiting, with the true scope being indicated by the following claims.

Implementations of the present disclosure may thus relate to one of the enumerated example embodiments (EEEs) listed below

In EEE1, a system comprises persistent storage specifying: a base feature, an enhanced feature, and an overall ratio defining a proportionality between input provided by a user and output provided to the user when the user engages in the base feature and the enhanced feature; and one or more processors configured to: receive, from a client device, a first input for the base feature, wherein the client device is associated with the user; determine, based on the first input and a state of the system, that the enhanced feature has not been activated; in response to determining that the enhanced feature has not been activated, determine a first output of the base feature, wherein the first output is probabilistically proportional to the first input in accordance with a first ratio that is less than or equal to the overall ratio; provide, to the client device, the first output; receive, from the client device, a second input for the base feature; determine, based on the second input and the state of the system, that the enhanced feature has been activated; in response to determining that the enhanced feature has been activated, provide, to the client device, one or more additional inputs that can be used with the enhanced feature, wherein the one or more additional inputs are probabilistically proportional to expected values of respectively associated additional outputs in accordance with the overall ratio; receive, from the client device, a selected input from the one or more additional inputs; in response to receiving the selected input, determine a particular additional output for the enhanced feature, wherein the particular additional output is probabilistically proportional to the selected input in accordance with the overall ratio; and provide, to the client device, the particular additional output.

EEE2 is the system of EEE1, wherein the system is a remote computing infrastructure containing computing resources, wherein the first input is a first computational task, wherein the second input is a second computational task, wherein the state of the system includes computing resource utilization of the system, and wherein the enhanced feature allocates more of the computing resources to the client device than the base feature.

EEE3 is the system of EEE1, wherein the system is an access network containing network capacity, wherein the first input is a first data transfer, wherein the second input is a second data transfer, wherein the state of the system includes network capacity utilization of the system, and wherein the enhanced feature allocates more of network capacity to the client device than the base feature.

EEE4 is the system of any previous EEE, wherein the first input, second input, each of the one or more additional inputs, the first output, and the particular additional output are representations of values.

EEE5 is the system of any previous EEE, wherein determining the first output comprises producing, by way of a random number generator, the first output to be probabilistically proportional to the first input in accordance with the first ratio, and wherein determining the particular additional output comprises producing, by way of the random number generator, the particular additional output to be probabilistically proportional to the selected input in accordance with the overall ratio.

EEE6 is the system of any previous EEE, wherein providing the first output causes the client device to display an animation that resolves to a visual representation of the first output, and wherein providing the particular additional output causes the client device to display a further animation that resolves to a further visual representation of the particular additional output.

EEE7 is the system of any previous EEE, wherein providing the one or more additional inputs causes the client device to display a representation of the one or more additional inputs and the expected values of their respectively associated additional outputs.

EEE8 is the system of any previous EEE, wherein the overall ratio is between 0.8 and 0.98.

EEE9 is the system of any previous EEE, wherein the particular additional output is a probabilistic expected value that is design parameter of the system, and wherein the selected input is proportional to the probabilistic expected value in accordance with the overall ratio.

EEE10 is the system of any previous EEE, wherein the first ratio equals the overall ratio.

EEE11 is the system of any previous EEE, wherein when no input from the one or more additional inputs is selected, the one or more processors are further configured to: determine a second output of the enhanced feature, wherein the second output is probabilistically proportional to the second input in accordance with a second ratio, wherein the overall ratio is based on a linear combination of the first ratio and the second ratio; and provide, to the client device, the second output.

EEE12 is the system of any previous EEE, wherein the second output is a probabilistic expected value that is design parameter of the system.

EEE13 is a computer-implemented method involving the steps of any previous EEE.

EEE14 is an article of manufacture may include a non-transitory computer-readable medium, having stored thereon program instructions that, upon execution by a computing system, cause the computing system to perform operations in accordance with the steps of any previous EEE.

EEE15 includes various means for carrying out each of the operations of the steps of any previous EEE.

1. A system comprising:

persistent storage specifying: a base feature, an enhanced feature, and an overall ratio defining a proportionality between input provided by a user and output provided to the user when the user engages in the base feature and the enhanced feature;
one or more processors configured to:

receive, from a client device, a first input for the base feature, wherein the client device is associated with the user;
determine, based on the first input and a state of the system, that the enhanced feature has not been activated;
in response to determining that the enhanced feature has not been activated, determine a first output of the base feature, wherein the first output is probabilistically proportional to the first input in accordance with a first ratio that is less than or equal to the overall ratio;
provide, to the client device, the first output;
receive, from the client device, a second input for the base feature;
determine, based on the second input and the state of the system, that the enhanced feature has been activated;
in response to determining that the enhanced feature has been activated, provide, to the client device, one or more additional inputs that can be used with the enhanced feature, wherein the one or more additional inputs are probabilistically proportional to expected values of respectively associated additional outputs in accordance with the overall ratio;
receive, from the client device, a selected input from the one or more additional inputs;
in response to receiving the selected input, determine a particular additional output for the enhanced feature, wherein the particular additional output is probabilistically proportional to the selected input in accordance with the overall ratio; and
provide, to the client device, the particular additional output.

2. The system of clause 1, wherein the system is a remote computing infrastructure containing computing resources, wherein the first input is a first computational task, wherein the second input is a second computational task, wherein the state of the system includes computing resource utilization of the system, and wherein the enhanced feature allocates more of the computing resources to the client device than the base feature.

3. The system of clause 1, wherein the system is an access network containing network capacity, wherein the first input is a first data transfer, wherein the second input is a second data transfer, wherein the state of the system includes network capacity utilization of the system, and wherein the enhanced feature allocates more of network capacity to the client device than the base feature.

4. The system of any of clauses 1-3, wherein the first input, second input, each of the one or more additional inputs, the first output, and the particular additional output are representations of values.

5. The system of any of clauses 1-4, wherein determining the first output comprises producing, by way of a random number generator, the first output to be probabilistically proportional to the first input in accordance with the first ratio, and wherein determining the particular additional output comprises producing, by way of the random number generator, the particular additional output to be probabilistically proportional to the selected input in accordance with the overall ratio.

6. The system of any of clauses 1-5, wherein providing the first output causes the client device to display an animation that resolves to a visual representation of the first output, and wherein providing the particular additional output causes the client device to display a further animation that resolves to a further visual representation of the particular additional output.

7. The system of any of clauses 1-6, wherein providing the one or more additional inputs causes the client device to display a representation of the one or more additional inputs and the expected values of their respectively associated additional outputs.

8. The system of any of clauses 1-7, wherein the overall ratio is between 0.8 and 0.98.

9. The system of any of clauses 1-8, wherein the particular additional output is a probabilistic expected value that is design parameter of the system, and wherein the selected input is proportional to the probabilistic expected value in accordance with the overall ratio.

10. The system of any of clauses 1-9, wherein the first ratio equals the overall ratio.

11. The system of any of clauses 1-10, wherein when no input from the one or more additional inputs is selected, the one or more processors are further configured to:

determine a second output of the enhanced feature, wherein the second output is probabilistically proportional to the second input in accordance with a second ratio, wherein the overall ratio is based on a linear combination of the first ratio and the second ratio; and
provide, to the client device, the second output.

12. The system of clause 11, wherein the second output is a probabilistic expected value that is design parameter of the system.

13. A computer-implemented method comprising:

receiving, from a client device, a first input for a base feature of a system, wherein the client device is associated with a user;
determining, based on the first input and a state of the system, that an enhanced feature of the system has not been activated;
in response to determining that the enhanced feature has not been activated, determining a first output of the base feature, wherein the first output is probabilistically proportional to the first input in accordance with a first ratio that is less than or equal to an overall ratio;
providing, to the client device, the first output;
receiving, from the client device, a second input for the base feature;
determining, based on the second input and the state of the system, that the enhanced feature has been activated;
in response to determining that the enhanced feature has been activated, providing, to the client device, one or more additional inputs that can be used with the enhanced feature, wherein the one or more additional inputs are probabilistically proportional to expected values of respectively associated additional outputs in accordance with the overall ratio;
receiving, from the client device, a selected input from the one or more additional inputs;
in response to receiving the selected input, determining a particular additional output for the enhanced feature, wherein the particular additional output is probabilistically proportional to the selected input in accordance with the overall ratio; and

providing, to the client device, the particular additional output.

14. The computer-implemented method of clause 13, wherein determining the first output comprises producing, by way of a random number generator, the first output to be probabilistically proportional to the first input in accordance with the first ratio, and wherein determining the particular additional output comprises producing, by way of the random number generator, the particular additional output to be probabilistically proportional to the selected input in accordance with the overall ratio.

15. The computer-implemented method of any of clauses 13-14, wherein providing the first output causes the client device to display an animation that resolves to a visual representation of the first output, and wherein providing the particular additional output causes the client device to display a further animation that resolves to a further visual representation of the particular additional output.

16. The computer-implemented method of any of clauses 13-15, wherein providing the one or more additional inputs causes the client device to display a representation of the one or more additional inputs and the expected values of their respectively associated additional outputs.

17. The computer-implemented method of any of clauses 13-16, wherein the particular additional output is a probabilistic expected value that is design parameter of the system, and wherein the selected input is proportional to the probabilistic expected value in accordance with the overall ratio.

18. The computer-implemented method of any of clauses 13-17, wherein when no input from the one or more additional inputs is selected, the computer-implemented method further comprises:

determining a second output of the enhanced feature, wherein the second output is probabilistically proportional to the second input in accordance with a second ratio, wherein the overall ratio is based on a linear combination of the first ratio and the second ratio; and

providing, to the client device, the second output.

19. The computer-implemented method of clauses 18, wherein the second output is a probabilistic expected value that is design parameter of the system.

20. An article of manufacture including a non-transitory computer-readable medium, having stored thereon program instructions that, upon execution by a computing system, cause the computing system to perform operations comprising:

receiving, from a client device, a first input for a base feature of a system, wherein the client device is associated with a user;

determining, based on the first input and a state of the system, that an enhanced feature of the system has not been activated;

in response to determining that the enhanced feature has not been activated, determining a first output of the base feature, wherein the first output is probabilistically proportional to the first input in accordance with a first ratio that is less than or equal to an overall ratio;

providing, to the client device, the first output;

receiving, from the client device, a second input for the base feature;

determining, based on the second input and the state of the system, that the enhanced feature has been activated;

in response to determining that the enhanced feature has been activated, providing, to the client device, one or more additional inputs that can be used with the enhanced feature, wherein the one or more additional inputs are probabilistically proportional to the expected values of respectively associated additional outputs in accordance with the overall ratio;

receiving, from the client device, a selected input from the one or more additional inputs;

in response to receiving the selected input, determining a particular additional output for the enhanced feature, wherein the particular additional output is probabilistically proportional to the selected input in accordance with the overall ratio; and

providing, to the client device, the particular additional output.

21. The article of manufacture of clause 20, wherein determining the first output comprises producing, by way of a random number generator, the first output to be probabilistically proportional to the first input in accordance with the first ratio, and wherein determining the particular additional output comprises producing, by way of the random number generator, the particular additional output to be probabilistically proportional to the selected input in accordance with the overall ratio.

22. The article of manufacture of any of clauses 20-21, wherein providing the first output causes the client device to display an animation that resolves to a visual representation of the first output, and wherein providing the particular additional output causes the client device to display a further animation that resolves to a further visual representation of the particular additional output.

23. The article of manufacture of any of clauses 20-22, wherein providing the one or more additional inputs causes the client device to display a representation of the one or more additional inputs and the expected values of their respectively associated additional outputs.

24. The article of manufacture of any of clauses 20-23, wherein the particular additional output is a probabilistic expected value that is design parameter of the system, and wherein the selected input is proportional to the probabilistic expected value in accordance with the overall ratio.

25. The article of manufacture of any of clauses 20-24, wherein when no input from the one or more additional inputs is selected, wherein the operations further comprise:

> determining a second output of the enhanced feature, wherein the second output is probabilistically proportional to the second input in accordance with a second ratio, wherein the overall ratio is based on a linear combination of the first ratio and the second ratio; and
> providing, to the client device, the second output.

**Claims**

1.  A system comprising:

> persistent storage specifying: a base feature, an enhanced feature, and an overall ratio defining a proportionality between input provided by a user and output provided to the user when the user engages in the base feature and the enhanced feature;
> one or more processors configured to:
>
>> receive, from a client device, a first input for the base feature, wherein the client device is associated with the user;
>> determine, based on the first input and a state of the system, that the enhanced feature has not been activated;
>> in response to determining that the enhanced feature has not been activated, determine a first output of the base feature, wherein the first output is probabilistically proportional to the first input in accordance with a first ratio that is less than or equal to the overall ratio;
>> provide, to the client device, the first output;
>> receive, from the client device, a second input for the base feature;
>> determine, based on the second input and the state of the system, that the enhanced feature has been activated;
>> in response to determining that the enhanced feature has been activated, provide, to the client device, one or more additional inputs that can be used with the enhanced feature, wherein the one or more additional inputs are probabilistically proportional to expected values of respectively associated additional outputs in accordance with the overall ratio;
>> receive, from the client device, a selected input from the one or more additional inputs;
>> in response to receiving the selected input, determine a particular additional output for the enhanced feature, wherein the particular additional output is probabilistically proportional to the selected input in accordance with the overall ratio; and
>> provide, to the client device, the particular additional output.

2. The system of claim 1, wherein the system is a remote computing infrastructure containing computing resources, wherein the first input is a first computational task, wherein the second input is a second computational task, wherein the state of the system includes computing resource utilization of the system, and wherein the enhanced feature allocates more of the computing resources to the client device than the base feature.

3. The system of claim 1, wherein the system is an access network containing network capacity, wherein the first input is a first data transfer, wherein the second input is a second data transfer, wherein the state of the system includes network capacity utilization of the system, and wherein the enhanced feature allocates more of network capacity to the client device than the base feature.

4. The system of any of claims 1-3, wherein the first input, second input, each of the one or more additional inputs, the first output, and the particular additional output are representations of values.

5. The system of any of claims 1-4, wherein determining the first output comprises producing, by way of a random number generator, the first output to be probabilistically proportional to the first input in accordance with the first ratio, and wherein determining the particular additional output comprises producing, by way of the random number generator, the particular additional output to be probabilistically proportional to the selected input in accordance with the overall ratio.

6. The system of any of claims 1-5, wherein providing the first output causes the client device to display an animation that resolves to a visual representation of the first output, and wherein providing the particular additional output causes the client device to display a further animation that resolves to a further visual representation of the particular additional output.

7. The system of any of claims 1-6, wherein providing the one or more additional inputs causes the client device to display a representation of the one or more additional inputs and the expected values of their respectively associated additional outputs.

8. The system of any of claims 1-7, wherein the overall ratio is between 0.8 and 0.98.

9. The system of any of claims 1-8, wherein the particular additional output is a probabilistic expected value that is design parameter of the system, and wherein the selected input is proportional to the probabilistic expected value in accordance with the overall ratio.

10. The system of any of claims 1-9, wherein the first ratio equals the overall ratio.

11. The system of any of claims 1-10, wherein when no input from the one or more additional inputs is selected, the one or more processors are further configured to:

determine a second output of the enhanced feature, wherein the second output is probabilistically proportional to the second input in accordance with a second ratio, wherein the overall ratio is based on a linear combination of the first ratio and the second ratio; and
provide, to the client device, the second output.

12. The system of claim 11, wherein the second output is a probabilistic expected value that is design parameter of the system.

13. A computer-implemented method configured to perform the operations of any one of claims 1-12.

14. An article of manufacture including a non-transitory computer-readable medium, having stored thereon program instructions that, upon execution by a computing system, cause the computing system to perform the operations of any one of claims 1-12.

15. A system comprising means for performing the operations of any one of claims 1-12.

**FIG. 1**

SERVER CLUSTER
200

208

SERVER DEVICES
202

DATA STORAGE
204

ROUTERS
206

210

NETWORK
212

# FIG. 2

FIG. 3

**FIG. 4**

EP 4 123 608 A1

CLIENT DEVICE — 500

NETWORK SERVICE PROVIDER — 502

PUBLIC OR PRIVATE NETWORK — 504

**FIG. 5**

EP 4 123 608 A1

FIG. 6

FIG. 7

FIG. 8

EP 4 123 608 A1

900 →

| INPUT 1: WAGER | → | OUTPUT: BASE GAME RESULT |

902 →

| INPUT 1: WAGER | → | OUTPUT: BASE GAME RESULT | → | OUTPUT: BONUS GAME TRIGGERED | → | OUTPUT: BONUS GAME RESULTS |

904 →

| INPUT 1: WAGER | → | OUTPUT: BASE GAME RESULT | → | OUTPUT: BONUS GAME TRIGGERED | → | INPUT: PLAYER CHOOSES VARIANT | → | OUTPUT: BONUS GAME RESULTS |

906 →

| INPUT 1: WAGER | → | OUTPUT: BASE GAME RESULT | → | OUTPUT: BONUS GAME TRIGGERED | → | INPUT: PLAYER PROVIDES UPSIZER WAGER | → | OUTPUT: BONUS GAME RESULTS |

# FIG. 9

| | Scenario 1 | Scenario 2 | Scenario 3 | Scenario 4 | Scenario 5 | Scenario 6 | Scenario 7 | Scenario 8 |
|---|---|---|---|---|---|---|---|---|
| RTP_total | 96.25% | 96.25% | 96.25% | 96.25% | 95.00% | 95.00% | 95.00% | 95.00% |
| r_upsizer | 100 | 100 | 150 | 150 | 150 | 150 | 150 | 150 |
| r_bonus | 50 | 50 | 50 | 75 | 50 | 75 | 75 | 75 |
| m | 200 | 200 | 200 | 200 | 200 | 200 | 200 | 300 |
| | | | | | | | | |
| w | $ 1.00 | $ 2.00 | $ 2.00 | $ 2.00 | $ 2.00 | $ 2.00 | $ 1.00 | $ 1.00 |
| | | | | | | | | |
| w_upsizer | $ 51.95 | $ 103.90 | $ 207.79 | $ 155.84 | $ 210.53 | $ 157.89 | $ 78.95 | $ 78.95 |
| RTP_bonus | 25.00% | 25.00% | 25.00% | 37.50% | 25.00% | 37.50% | 37.50% | 25.00% |
| RTP_base | 71.25% | 71.25% | 71.25% | 58.75% | 70.00% | 57.50% | 57.50% | 70.00% |
| RTP_upsizer | 39.69% | 39.69% | 49.36% | 53.97% | 49.14% | 53.77% | 53.77% | 39.58% |
| RTP_base+upsizer | 56.56% | 56.56% | 46.89% | 42.28% | 45.86% | 41.23% | 41.23% | 55.42% |
| | | | | | | | | |
| Total wager per m spins | $ 251.95 | $ 503.90 | $ 607.79 | $ 555.84 | $ 610.53 | $ 557.89 | $ 278.95 | $ 378.95 |
| Total expected payout per m spins | $ 242.50 | $ 485.00 | $ 585.00 | $ 535.00 | $ 580.00 | $ 530.00 | $ 265.00 | $ 360.00 |
| Expected return of base game per m spins | $ 142.50 | $ 285.00 | $ 285.00 | $ 235.00 | $ 280.00 | $ 230.00 | $ 115.00 | $ 210.00 |
| Per spin RTP of base game | 71.25% | 71.25% | 71.25% | 58.75% | 70.00% | 57.50% | 57.50% | 70.00% |

1000

1002 RTP_total
1004 r_upsizer
1006 r_bonus
1008 m
1010 w
1012 w_upsizer
1014 RTP_bonus
1016 RTP_base
1018 RTP_upsizer
1020 RTP_base+upsizer
1022 Total wager per m spins
1024 Total expected payout per m spins
1026 Expected return of base game per m spins
1028 Per spin RTP of base game

# FIG. 10

EP 4 123 608 A1

FIG. 11

1200 → RECEIVE, FROM A CLIENT DEVICE, A FIRST INPUT FOR A BASE FEATURE OF A SYSTEM, WHEREIN THE CLIENT DEVICE IS ASSOCIATED WITH A USER

1202 → DETERMINE, BASED ON THE FIRST INPUT AND A STATE OF THE SYSTEM, THAT AN ENHANCED FEATURE OF THE SYSTEM HAS NOT BEEN ACTIVATED

1204 → IN RESPONSE TO DETERMINING THAT THE ENHANCED FEATURE HAS NOT BEEN ACTIVATED, DETERMINE A FIRST OUTPUT OF THE BASE FEATURE, WHEREIN THE FIRST OUTPUT IS PROBABILISTICALLY PROPORTIONAL TO THE FIRST INPUT IN ACCORDANCE WITH A FIRST RATIO THAT IS LESS THAN OR EQUAL TO AN OVERALL RATIO

1206 → PROVIDE, TO THE CLIENT DEVICE, THE FIRST OUTPUT

1208 → RECEIVE, FROM THE CLIENT DEVICE, A SECOND INPUT FOR THE BASE FEATURE

1210 → DETERMINE, BASED ON THE SECOND INPUT AND THE STATE OF THE SYSTEM, THAT THE ENHANCED FEATURE HAS BEEN ACTIVATED

1212 → IN RESPONSE TO DETERMINING THAT THE ENHANCED FEATURE HAS BEEN ACTIVATED, PROVIDING, TO THE CLIENT DEVICE, ONE OR MORE ADDITIONAL INPUTS THAT CAN BE USED WITH THE ENHANCED FEATURE, WHEREIN THE ONE OR MORE ADDITIONAL INPUTS ARE PROBABILISTICALLY PROPORTIONAL TO EXPECTED VALUES OF RESPECTIVELY ASSOCIATED ADDITIONAL OUTPUTS IN ACCORDANCE WITH THE OVERALL RATIO

1214 → RECEIVE, FROM THE CLIENT DEVICE, A SELECTED INPUT FROM THE ONE OR MORE ADDITIONAL INPUTS

1216 → IN RESPONSE TO RECEIVING THE SELECTED INPUT, DETERMINE A PARTICULAR ADDITIONAL OUTPUT FOR THE ENHANCED FEATURE, WHEREIN THE PARTICULAR ADDITIONAL OUTPUT IS PROBABILISTICALLY PROPORTIONAL TO THE SELECTED INPUT IN ACCORDANCE WITH THE OVERALL RATIO

1218 → PROVIDE, TO THE CLIENT DEVICE, THE PARTICULAR ADDITIONAL OUTPUT

# FIG. 12

Europäisches
Patentamt

European
Patent Office

Office européen
des brevets

# EUROPEAN SEARCH REPORT

Application Number

**EP 22 18 5236**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/034352 A1 (ARISTOCRAT TECH INC [US]) 25 February 2021 (2021-02-25) * the whole document * ----- | 1-15 | INV. G07F17/32 |
| X | US 2017/076548 A1 (WASHINGTON GEORG [US] ET AL) 16 March 2017 (2017-03-16) * the whole document * ----- | 1-15 | |

|  |  |  | TECHNICAL FIELDS SEARCHED (IPC) |
|---|---|---|---|
|  |  |  | G07F |

The present search report has been drawn up for all claims

| Place of search | Date of completion of the search | Examiner |
|---|---|---|
| The Hague | 18 November 2022 | Verhoef, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 5236

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2022

| Patent document cited in search report | | Publication date | Patent family member(s) | | Publication date |
|---|---|---|---|---|---|
| WO 2021034352 | A1 | 25-02-2021 | AU | 2020333434 A1 | 07-04-2022 |
| | | | US | 10902702 B1 | 26-01-2021 |
| | | | US | 2021134120 A1 | 06-05-2021 |
| | | | US | 2022245999 A1 | 04-08-2022 |
| | | | WO | 2021034352 A1 | 25-02-2021 |
| US 2017076548 | A1 | 16-03-2017 | NONE | | |

EPO FORM P0459

For more details about this annex : see Official Journal of the European Patent Office, No. 12/82